# EUROPÄISCHE PATENTANMELDUNG

(11) **EP 4 481 239 A1**
(43) Veröffentlichungstag der Anmeldung: **25.12.2024**
(21) Anmeldenummer: 24173876.4
(22) Anmeldetag: 02.05.2024
(51) Int. Cl.: F16H 57/08, F16C 17/18, F16C 19/46, F16C 33/10

(54) **ANLAUFSCHEIBE ZUM VERTEILEN EINER FLÜSSIGKEIT MIT SCHMIERMITTELTASCHEN**

(30) Priorität: 23.06.2023 DE 102023205957
(71) Anmelder: E. Winkemann GmbH, 58840 Plettenberg (DE)
(72) Erfinder: RENNEN, Tim, 57462 Olpe (DE); GADOMSKI, Tino, 58840 Plettenberg (DE); DEHNE, Detlev, 58849 Herscheid (DE)
(74) Vertreter: Kutzenberger Wolff & Partner

(57) **Zusammenfassung**

Die Erfindung betrifft eine Anlaufscheibe (1) zum Verteilen einer Flüssigkeit, wobei die Anlaufscheibe (1) eine sich parallel zu einer Drehachse der Anlaufscheibe (1) erstreckende zentrale Bohrung (2) zum Aufschieben der Anlaufscheibe (1) auf einen Bolzen oder eine Welle aufweist, wobei die Anlaufscheibe (1) eine erste Anlauffläche (10) und eine zweite Anlauffläche (20) aufweist, wobei die erste Anlauffläche (10) und die zweite Anlauffläche (20) im Wesentlichen parallel zueinander angeordnet sind, wobei die erste Anlauffläche (10) eine erste Schmiermitteltasche (11) in Form einer Vertiefung in der ersten Anlauffläche (10) aufweist und/oder die zweite Anlauffläche (20) eine zweite Schmiermitteltasche (21) in Form einer Vertiefung in der zweiten Anlauffläche (20) aufweist, wobei die erste Schmiermitteltasche (11) oder die zweite Schmiermitteltasche (21) mit der jeweiligen anderen Anlauffläche (10, 20) oder mit einer jeweiligen korrespondierenden ersten oder zweiten Schmiermitteltasche (11, 21) mittels eines insbesondere im Wesentlichen parallel zur Drehachse axial durch die Anlaufscheibe verlaufenden Kanals (3) miteinander fluidverbunden sind, dadurch gekennzeichnet, dass die erste und/oder die zweite Schmiermitteltasche (11, 21) sich jeweils in radialer Richtung bezogen auf die Drehachse nach außen verjüngen.

## Beschreibung

### Stand der Technik

Die Erfindung betrifft eine Anlaufscheibe zum Verteilen einer Flüssigkeit mit einer zentralen Bohrung zum Aufschieben auf einen Bolzen oder eine Welle und ein Planetengetriebe.

Anlaufscheiben finden insbesondere Nutzen bei Kraftfahrzeugen. Beispielsweise werden Anlaufscheiben im Motor und in den Antriebssträngen von Fahrzeugen verwendet, wobei die Anlaufscheiben bevorzugt in Planetengetrieben eingesetzt werden. Hier werden die Anlaufscheiben zwischen den Planetenrädern und dem Planetenträger auf den Planetenbolzen angeordnet. Vorteilhafterweise kann durch die Verwendung einer Anlaufscheibe zwischen dem Planetenträger und dem Planetenrad der Verschleiß reduziert werden. Die Anlaufscheibe erzeugt durch die erhöhten Druckkräfte eine senkrecht wirkende Kraft, welche durch das Schmiermittel auf das Gegenstück übertragen wird und trennt somit die Reibpartner voneinander. Oftmals sind die Planetenträger nicht gehärtet und drohen mit fortschreitender Betriebsdauer durch den konstanten Verschleiß auszufallen. Die Anlaufscheibe wirkt sich somit insbesondere positiv auf die Lebensdauer eines solchen Planetengetriebes aus.

Ähnlich finden Anlaufscheiben an Stellen im Motor oder an weiteren Positionen im Antriebsstrang Anwendung. Ferner kann eine Anlaufscheibe in weiteren Getriebeformen oder bei elektrischen Maschinen verwendet werden, um in analogerweise den Verschleiß zwischen rotierenden Bauteilen zu reduzieren.

Aus dem Stand der Technik sind bereits Anlaufscheiben bekannt. Die DE 10 2013 104 129 B3 beschreibt eine Anlaufscheibe zum Aufschieben auf einen Bolzen oder eine Welle, wobei die Anlaufscheibe mindestens eine Schmiermitteltasche an den jeweils beiden flachen Anlaufflächen aufweist. Jeweils eine Schmiermitteltasche der jeweiligen Anlauffläche weist eine korrespondierende Schmiermitteltasche auf der anderen Anlauffläche auf, wobei die korrespondierenden Schmiermitteltaschen mittels eines axial durch die Anlaufscheibe verlaufenden Kanals verbunden sind. Somit kann das Schmiermittel, welches sich in den Schmiermitteltaschen anstaut, auf die andere Seite der Anlaufscheibe transportiert werden.

Die Schmiermitteltaschen sind dreiecksförmig ausgebildet und eine Spitze des Dreieckes ist radial nach innen gerichtet. Ferner verläuft durch die radial nach innen gerichtete Spitze der Zulaufkanal, wobei der Zulaufkanal ein Schmiermittel in die Schmiermitteltasche transportiert. Sofern die Anlaufscheibe rotiert, wird das Schmiermittel durch die Zentrifugalkraft in die Schmiermitteltaschen gepresst. Die dreiecksförmige Schmiermitteltasche weitet sich radial nach außen hin auf, wobei somit lediglich ein geringerer Druck an den Schmiermitteltaschen entsteht. Auf der anderen Seite erzeugt das durch die Rotation nach außen geförderte Schmiermittel einen Unterdruck an der Anlaufscheibe, wodurch die Anlaufscheibe in Richtung eines zu nächstliegenden zu schmierenden Bauteils gezogen wird. Durch die vorliegende Kontur und der erhöhten Zentrifugalkräfte bei neuartigen Antrieben (wie z.B. Elektro-Motoren) kann durch die nach außen hin offene Form, das Schmiermittel schneller nach außen gefördert werden und folglich die erzielte Auftriebswirkung nicht mehr optimal wirken. Dieser Effekt der Trennung der Anlaufscheibe und den Gegenpartnern wird zudem durch veränderte Schmiermittel bei neuartigen Antrieben zusätzlich beeinflusst (z.B. niedrigere Viskosität). Weiterhin gilt es die Anlaufscheibe möglichst flach und kompakt auszugestalten, da der Bauraum in den Antriebssträngen eines Fahrzeugs, sowie im Motor, sehr begrenzt ist.

### Offenbarung der Erfindung

Vor diesem Hintergrund stellt sich die Aufgabe, eine Anlaufscheibe der eingangs genannten Art zur Verfügung zu stellen, welche das Verschleißrisiko der mechanischen Bauteile, zwischen denen die Anlaufscheibe angeordnet ist, platzsparend reduziert.

Die Aufgabe wird gelöst durch eine Anlaufscheibe zum Verteilen einer Flüssigkeit, wobei die Anlaufscheibe eine sich parallel zu einer Drehachse der Anlaufscheibe erstreckende zentrale Bohrung zum Aufschieben der Anlaufscheibe auf einen Bolzen oder eine Welle aufweist, wobei die Anlaufscheibe eine erste Anlauffläche und eine zweite Anlauffläche aufweist, wobei die erste Anlauffläche und die zweite Anlauffläche insbesondere im Wesentlichen parallel zueinander angeordnet sind, wobei die erste Anlauffläche eine erste Schmiermitteltasche in Form einer Vertiefung in der ersten Anlauffläche aufweist und/oder die zweite Anlauffläche eine zweite Schmiermitteltasche in Form einer Vertiefung in der zweiten Anlauffläche aufweist, wobei optional die erste Schmiermitteltasche oder die zweite Schmiermitteltasche mit der jeweiligen anderen Anlauffläche oder mit einer jeweiligen korrespondierenden ersten oder zweiten Schmiermitteltasche mittels eines insbesondere im Wesentlichen parallel zur Drehachse axial durch die Anlaufscheibe verlaufenden Kanals fluidverbunden sind, wobei die erste und/oder die zweite Schmiermitteltasche sich jeweils in radialer Richtung bezogen auf die Drehachse nach außen verjüngen.

Die erfindungsgemäße Anlaufscheibe zeichnet sich vorteilhaft dadurch aus, dass die Verjüngung in radialer Richtung nach außen, bezogen auf die Drehachse, der ersten und/oder der zweiten Schmiermitteltasche einen höheren Druck durch das Schmiermittel erzeugt. Die Rotationsbewegung drückt durch die Zentrifugalkraft eine Flüssigkeit, insbesondere ein Schmiermittel, in die Schmiermitteltaschen der Anlaufscheibe. Die Verjüngung der Schmiermitteltaschen erzeugt eine Querschnittsflächenreduktion der Schmiermitteltasche. Diese Querschnittsflächenreduktion ermöglicht eine Steigerung des vorliegenden Drucks in den Schmiermitteltaschen gegenüber dem Stand der Technik. Eine Steigerung des vorliegenden Drucks an der Schmiermitteltasche kann insbesondere dem den erzeugten Unterdruck an der Anlaufscheibe durch die verdrängte Flüssigkeit entgegenwirken. Es ist insbesondere denkbar, dass die Anlaufscheibe somit schneller ein Kräftegleichgewicht erreicht, wobei die Anlaufscheibe nicht näher in Richtung einer der zu schmierenden Bauteile gezogen wird. Der an den Schmiermitteltaschen entstehende Druck entsteht insbesondere dadurch, dass die Anlaufscheibe nah an den zu schmierenden Bauteilen angeordnet sein kann, wobei ein Zwischenraum durch die Schmiermitteltasche und dem anliegenden Bauteil vorliegen kann. Weiterhin wird das Schmiermittel aus den Schmiermitteltaschen auf die jeweilige Anlauffläche gebracht, wobei der hierbei entstehende Schmiermittelfilm die zu schmierenden Bauteile schmiert.

Erfindungsgemäß dient die Anlaufscheibe dem Verteilen einer Flüssigkeit, insbesondere eines Schmiermittels. Die Anlaufscheibe kann eine Haupterstreckungsebene aufweisen, wobei die Anlaufscheibe bevorzugt dünnwandig ausgebildet ist. Weiterhin kann die Anlaufscheibe eine runde Querschnittsfläche aufweisen. Die Anlaufscheibe weist erfindungsgemäß eine erste und eine zweite Anlauffläche auf, wobei die erste und die zweite Anlauffläche bevorzugt im Wesentlichen flach und besonders bevorzugt parallel zu der Haupterstreckungsebene angeordnet sind. Die Anlaufscheibe kann zwischen zwei zu schmierenden Bauteilen angeordnet werden, wobei diese insbesondere parallel zueinander angeordnet sind. Demzufolge kann es vorteilhaft sein, dass die erste und zweite Anlauffläche im Wesentlichen parallel zueinander angeordnet sind. Die zu schmierenden Bauteile sind weiterhin oftmals über einen Bolzen, eine Achse oder eine Welle verbunden. Um die Anlaufscheibe beispielsweise zwischen den zu schmierenden Bauteilen anzuordnen, weist die Anlaufscheibe erfindungsgemäß eine sich parallel zu einer Drehachse der Anlaufscheibe erstreckende zentrale Bohrung zum Aufschieben auf die Achse, den Bolzen oder die Welle auf. Die Drehachse kann dabei primär durch die Achse, den Bolzen oder die Welle vorgegeben werden. Außerdem kann die erste Anlauffläche eine erste Schmiermitteltasche aufweisen und die zweite Anlauffläche eine zweite Schmiermitteltasche aufweisen.

Im Rahmen dieser Anmeldung werden Schmiermitteltaschen als Vertiefungen in den jeweiligen Anlaufflächen verstanden. So kann die erste Schmiermitteltasche in Form einer Vertiefung auf der ersten Anlauffläche ausgebildet sein. Dies gilt in analogerweise auch für die zweite Schmiermitteltasche. Eine erste Schmiermitteltasche und/oder eine zweite Schmiermitteltasche ist bevorzugt mit einer jeweiligen anderen korrespondierenden Schmiermitteltasche oder mit der jeweiligen anderen Anlauffläche mittels eines insbesondere im Wesentlichen parallel zur Drehachse axial durch die Anlaufscheibe verlaufenden Kanals fluidverbunden. Dieser Kanal kann den Schmiermittelaustausch zwischen der ersten Schmiermitteltasche und der zweiten Schmiermitteltasche, oder einer Schmiermitteltasche mit der jeweiligen anderen Anlauffläche ermöglichen. Der Kanal kann entweder im Wesentlichen parallel zur Drehachse axial durch die Anlaufscheibe verlaufen oder in einem Winkel zu der Drehachse durch die Anlaufscheibe verlaufen. Somit kann das Schmiermittel an der ersten Anlauffläche und an der zweiten Anlauffläche für Schmierung sorgen, wobei das nächstliegende Bauteil an der ersten Anlauffläche und das nächstliegende Bauteil an der zweiten Anlauffläche geschmiert werden kann. Alternativ kann keine Fluidverbindung bzw. kein Kanal zwischen der ersten Anlauffläche und der zweiten Anlauffläche vorliegen. Vorteilhafterweise kann so eine Anlauffläche nicht geschmiert werden, um unterschiedliche Reibmomente zu erzeugen. Je nach Anwendungsfall kann demzufolge nur das benachbarte Bauteil von der Anlaufscheibe mittels Schmiermittel distanziert werden, welches an der jeweiligen Anlauffläche angeordnet ist, die eine Schmiermitteltasche aufweist. Es ist denkbar, dass eine Anlauffläche mehr Schmiermittel benötigt, wobei der verbindende Kanal derart ausgerichtet sein kann, dass ein Schmiermittelfluss in eine Richtung begünstigt wird. So kann sich beispielsweise der Kanal in einem Winkelbereich zwischen 0 bis 10° ausgehend von einer ersten Anlauffläche relativ zur Drehachse hin zur zweiten Anlauffläche erstrecken. Im Betrieb wäre somit die Schmiermittelförderung in Richtung der zweiten Anlauffläche durch den Kanal verstärkt. Die Zentrifugalkraft kann das Schmiermittel entlang des Kanals in Richtung der zweiten Anlauffläche drücken. Dies gilt in analogerweise für die zweite Anlauffläche, wobei der Kanal sich in einem Winkelbereich zwischen 0 bis 10° ausgehend von der zweiten Anlauffläche relativ zur Drehachse in Richtung der ersten Anlauffläche erstreckt. Es ist denkbar, dass sich lediglich die erste oder die zweite Schmiermitteltasche oder beide der ersten und zweiten Schmiermitteltaschen in radialer Richtung bezogen auf die Drehachse nach außen verjüngen. Dies wäre besonders bevorzugt, sofern die durch den Unterdruck erzeugte Zugkraft lediglich auf einer Seite der Anlaufscheibe zu kompensieren ist. Vorzugsweise weist lediglich eine Anlauffläche eine Schmiermitteltasche auf, wobei diese Schmiermitteltasche besonders vorzugsweise mit dem oben beschriebenen Kanal mit der jeweiligen anderen Anlauffläche fluidverbunden ist.

Gemäß einer alternativen Ausgestaltungsform der Erfindung ist vorgesehen, dass die erste Anlauffläche mehrere erste Schmiermitteltaschen und/oder die zweite Anlauffläche mehrere zweite Schmiermitteltaschen aufweist, wobei die ersten Schmiermitteltaschen und die zweiten Schmiermitteltaschen insbesondere korrespondierend zueinander angeordnet sind, wobei die ersten und/oder die zweiten Schmiermitteltaschen der jeweiligen ersten oder zweiten Anlauffläche in einer Umfangsrichtung zueinander beabstandet sind. Eine erste Schmiermitteltasche auf der ersten Anlauffläche kann eine korrespondierende zweite Schmiermitteltasche auf der zweiten Anlauffläche aufweisen. Korrespondierend kann derart verstanden werden, dass die beiden Schmiermitteltaschen baugleich sind und/oder an der in einer Umfangsrichtung auf einer gleichen Position auf der jeweiligen Anlauffläche angeordnet sind. Somit kann eine die Fluidverbindung mittels des Kanals möglichst kurz ausgeführt werden. Weiterhin ist eine im Wesentlichen senkrechte Bohrung zur erste oder zweiten Anlauffläche insbesondere fertigungstechnisch einfacher herzustellen. Bevorzugt weist die Anlaufscheibe mehrere erste und/oder mehrere zweite Schmiermitteltaschen auf, wobei insbesondere bevorzugt zu jeder ersten Schmiermitteltasche eine korrespondierende zweite Schmiermitteltasche besteht. Weiter bevorzugt kann auch lediglich die erste Anlauffläche mehrere erste Schmiermitteltaschen aufweisen oder nur die zweite mehrere zweite Schmiermitteltaschen aufweisen ohne dass die jeweilige andere Anlauffläche erste oder zweite Schmiermitteltaschen aufweist. Somit kann eine Anlaufscheibe Schmiermitteltaschen auf nur einer Seite bzw. Anlauffläche aufweisen. Mit steigender Anzahl an Schmiermitteltaschen auf den jeweiligen Anlaufflächen kann vorteilhafterweise schneller ein Kräftegleichgewicht zwischen der durch den Unterdruck erzeugte Zugkraft in Richtung eines der anliegenden Bauteile und der dem durch das Schmiermittel erzeugten Gegendruck entstehen. So ist es denkbar, dass die erste Anlauffläche zwei bis acht erste und die zweite Anlauffläche zwei bis acht zweite Schmiermitteltaschen aufweisen. Um insbesondere ungleichmäßigen Kräften an der Anlaufscheibe zu vermeiden, werden die ersten und/oder zweiten Schmiermitteltaschen bevorzugt in Umfangsrichtung zueinander beabstandet, insbesondere maximal zueinander beabstandet. Hierbei ist es denkbar, dass bei einer kreisförmigen Anlaufscheibe der mögliche Winkelbereich, hier beispielsweise 360°, durch die Anzahl der jeweiligen Schmiermitteltaschen auf der jeweiligen Anlauffläche zu teilen. Bei zwei ersten Schmiermitteltaschen sind die Schmiermitteltaschen bevorzugt in Umfangsrichtung in einem Winkel von 180° zueinander angeordnet.

Gemäß einer weiteren alternativen Ausgestaltung der Erfindung ist vorgesehen, dass die erste und/oder die zweite Anlauffläche zusätzlich zu der ersten und/oder der zweiten Schmiermitteltasche mindestens eine weitere Schmiermitteltasche aufweist. Die erste und/oder die zweite Anlauffläche kann zusätzlich zu den ersten und/oder den zweiten Schmiermitteltaschen weitere Schmiermitteltaschen aufweisen. Diese weiteren Schmiermitteltaschen weisen jedoch nicht zwangsläufig eine korrespondierende weitere Schmiermitteltasche auf der jeweils anderen Anlauffläche auf. Ferner weisen die weiteren Schmiermitteltaschen vorzugsweise keinen im Wesentlichen parallel zur Drehachse axial durch die Anlaufscheibe verlaufenden Kanal auf. Die weiteren Schmiermitteltaschen sind bevorzugt in Umfangsrichtung zwischen den ersten und/oder zweiten Schmiermitteltaschen auf der ersten und/oder zweiten Anlauffläche angeordnet. Die weitere Schmiermitteltasche kann sich in radialer Richtung bezogen auf die Drehachse nach außen verjüngen, wobei somit die gleichen Wirkungen wie mit den ersten und zweiten Schmiermitteltaschen bewirkt werden. Vorteilhafterweise weist eine weitere Schmiermitteltasche keine fluide Verbindung zu der jeweiligen anderen Anlauffläche auf, wobei dies es ermöglicht einen Druck durch das Schmiermittel in der weiteren Schmiermitteltasche zu erzeugen, ohne einen Schmiermittelfluss auf die jeweilige andere Anlauffläche zu erlauben. Es ist denkbar, dass der Schmiermittelfluss auf die jeweilige andere Anlauffläche einen geringfügigen Druckabfall erzeugt, wobei es gilt diesen an der weiteren Schmiermitteltasche zu vermeiden. Darüber hinaus ist es denkbar, dass eine Anlauffläche mindestens eine jeweilige Schmiermitteltasche aufweist und die jeweilige andere Anlauffläche lediglich eine oder mehrere weitere Schmiermitteltaschen aufweist. Hier kann die jeweilige Schmiermitteltasche der einen Seite mit der anderen Anlauffläche über den Kanal verbunden werden und die andere Anlauffläche weist eine oder mehrere weitere Schmiermitteltaschen auf ohne mit der Anlauffläche fluidverbunden zu sein. Beispielsweise sei es denkbar, dass die erste Anlauffläche eine oder mehrere erste Schmiermitteltaschen aufweist, welche entweder mit der zweiten Anlauffläche oder mit einer korrespondieren zweiten Schmiermitteltasche fluidverbunden sind. In diesem Beispiel ist die erste Schmiermitteltasche mit der zweiten Anlauffläche fluidverbunden, wobei die zweite Anlauffläche eine oder mehrere weitere Schmiermitteltaschen aufweisen kann ohne eine zweite Schmiermitteltasche aufzuweisen. Diese stehen wiederrum mit der ersten Anlauffläche nicht in direkter Fluidverbindung.

In einer alternativen Ausgestaltung der Erfindung ist vorgesehen, dass die Gesamtanzahl der Schmiermitteltaschen auf der ersten Anlauffläche und der Gesamtanzahl von Schmiermitteltaschen auf der zweiten Anlauffläche voneinander abweicht. Die Gesamtzahl an Schmiermitteltaschen kann sich aus der Anzahl der ersten Schmiermitteltaschen und der Anzahl weiterer Schmiermitteltaschen auf der ersten Anlauffläche bestimmen. Dies gilt in analogerweise für die Gesamtanzahl an Schmiermitteltaschen auf der zweiten Anlauffläche. So kann die erste Anlauffläche beispielsweise mehr Schmiermitteltaschen als die zweite Anlauffläche aufweisen, wobei es durchaus denkbar ist, dass die zweite Anlauffläche keine zweite oder weitere Schmiermitteltaschen aufweist. Somit könnte beispielsweise eine kontrollierte Zugkraft durch den Unterdruck auf einer der Anlaufflächen genutzt werden. Bei einer differierenden Anzahl an Schmiermitteltaschen wäre es denkbar, dass die Anlauffläche mit der kleineren Anzahl an Schmiermitteltaschen eher in die Richtung des nächstliegenden Bauteils gezogen wird.

Gemäß einer weiteren Ausgestaltung der Erfindung ist vorgesehen, dass die erste und/oder die zweite Schmiermitteltasche sich bis zur einer durch die zentrale Bohrung gebildeten Innenwandung erstreckt. Die Anlaufscheibe weist bevorzugt einen ringförmigen Querschnitt in der Haupterstreckungsebene auf, wobei erfindungsgemäß eine zentrale Bohrung zum Aufschieben auf einen Bolzen oder eine Welle vorliegt. Die Anlaufscheibe kann eine innenliegende Stirnseite aufweisen und eine außenliegende Stirnseite aufweisen, wobei diese im Wesentlichen senkrecht zu der ersten und der zweiten Anlauffläche angeordnet sind. Die durch die zentrale Bohrung gebildete zylindrische Innenwandung kann als innenliegende Stirnseite erachtet werden. Die zentrale Bohrung kann eine im Wesentlichen kreisförmige Querschnittsfläche aufweisen. Die erste und/oder die zweite und/oder die weitere Schmiermitteltasche erstrecken sich bevorzugt ausgehend von der Innenwandung in radialer Richtung nach außen. Weiterhin gilt es bevorzugt, dass die Schmiermitteltaschen einen Eingangsbereich aufweisen, durch welchen das Schmiermittel in die Schmiermitteltaschen einfliest, wobei dieser Eingangsbereich an der zur Innenwandung angeordneten Kante angeordnet ist und auf der gesamten Breite des Eingangsbereichs der Krümmung der Innenwandung folgt. Dies wirkt sich insbesondere positiv auf den Schmiermittelfluss in die jeweilige Schmiermitteltasche aus. Ein breiterer Eingang, welcher der Krümmung der Innenwandung folgt, ermöglicht einen größeren Schmiermittefluss in die Schmiermitteltaschen.

In einer weiteren Ausgestaltung der Erfindung ist vorgesehen, dass die erste und/oder die zweite und/oder die weitere Schmiermitteltasche über einen Zulaufkanal in Form einer Vertiefung mit der Innenwandung fluidtechnisch verbunden ist. Der Zulaufkanal kann in Abhängigkeit des Anwendungsfalls breiter oder schmaler gefertigt werden. Dies ermöglicht einen kontrollierten Schmiermittelzufluss in die jeweiligen Schmiermitteltaschen angepasst an den jeweiligen Anwendungsfall.

Gemäß einer weiteren alternativen Ausgestaltung der Erfindung ist vorgesehen, dass die erste und/oder die zweite und/oder die weitere Schmiermitteltasche einen Rücksprungbereich aufweisen, wobei der Rücksprungbereich der jeweiligen Schmiermitteltaschen an der Innenwandung angeordnet ist, wobei der Rücksprungbereich bevorzugt mittig an der jeweiligen Schmiermitteltasche angeordnet ist. Der Rücksprungbereich kann eine Aussparung an der Innenwandung der Anlaufscheibe sein, wobei diese insbesondere mittig an den jeweiligen Schmiermitteltaschen angeordnet sind. Der Rücksprungbereich erstreckt sich bevorzugt von der ersten Anlauffläche bis zur zweiten Anlauffläche. Vorteilhaft kann somit, neben beispielsweise einem axialen Kanal, ein Schmiermittelfluss zwischen der ersten Anlauffläche und der zweiten Anlauffläche ermöglicht werden. Weiterhin kann der Rücksprungbereich das Schmiermittel sammeln, wobei diese Ansammlung an Schmiermittel direkt unter den jeweiligen Schmiermitteltaschen quasi direkt in die Schmiermitteltaschen einleitbar ist. Somit entstehen vorteilhafterweise in den Rücksprungbereichen lokale Schmiermittelansammlungen.

Gemäß einer alternativen Ausgestaltung der Erfindung ist vorgesehen, dass die erste und/oder die zweite Anlauffläche mindestens einen Abführkanal aufweisen, wobei ein erster und ein zweiter Abführkanal in Form einer Vertiefung auf der jeweiligen ersten oder der zweiten Anlauffläche angeordnet ist, wobei ein erster Abführkanal sich ausgehend von einer der ersten Schmiermitteltaschen in radialer Richtung nach außen bis zu einer radialen Stirnseite der Anlaufscheibe erstreckt und ein zweiter Abführkanal sich ausgehend von einer der zweiten Schmiermitteltaschen in radialer Richtung nach außen bis zu der radialen Stirnseite der Anlaufscheibe erstreckt. Der Abführkanal kann das Schmiermittel von den jeweiligen Anlaufflächen nach außen hin abführen. Dies ermöglicht insbesondere positiv eine aktive Kühlung der Anlaufscheibe und der anliegenden Bauteile. Kühleres Schmiermittel kann der Anlaufscheibe zugeführt werden, wobei bereits erwärmtes Kühlmittel durch den Abführkanal abgeführt werden kann. Dafür erstreckt sich der Abführkanal bevorzugt von einer in radialer Richtung äußeren Kante der Schmiermitteltasche bis hin zu der äußeren Stirnseite. Die Querschnittsfläche der Vertiefung des Abführkanals kann in Abhängigkeit des Anwendungsfall ausgelegt werden, wobei ein größerer Querschnitt eine größere Kühlwirkung ermöglichen würde. Nachteilig wirkt sich jedoch der nicht erzeugbare Druck durch das entweichende Schmiermittel aus und der vermeintliche Schmiermittelverbrauch, welcher nicht direkt einer Schmiermittelfilmbildung an der ersten und/oder an der zweiten Anlauffläche dient.

Gemäß einer weiteren alternativen Ausgestaltung der Erfindung ist vorgesehen, dass die Vertiefungen der ersten und/oder der zweiten und/oder der weiteren Schmiermitteltaschen dreiecksförmig oder trapezförmig sind. Die Vertiefungen der jeweiligen Schmiermitteltaschen werden bevorzugt mittels Prägen, Schleifen oder Fräsen hergestellt. Die Anlaufscheibe wird bevorzugt aus einem Metall hergestellt, wobei es bei einem weicheren Metall denkbar ist, dass die Vertiefungen mittels eines Pressverfahrens in die jeweiligen Anlaufflächen eingebracht werden. Weiterhin kann eine jeweilige Vertiefung eine dreiecksförmige - oder trapezförmige Querschnittsfläche aufweisen. Diese Formen eignen sich insbesondere dafür die erfindungsgemäße Verjüngung der Vertiefungen umzusetzen.

Alternativ wäre es denkbar, dass die Vertiefungen eine rautenförmige Querschnittsfläche aufweisen, wobei eine erste Verbreiterung des Querschnitts von der erfindungsgemäßen Verjüngung gefolgt wird. Hierbei wirkt sich die erste Verbreiterung der Querschnittsfläche insbesondere positiv auf die aufzunehmende Schmiermittelmenge aus. Zudem sind die Kanten der Vertiefungen bevorzugt im Wesentlichen gerade ausgeführt. Alternativ ist es jedoch denkbar, dass die Kanten der Vertiefungen der jeweiligen Schmiermitteltaschen gekrümmt sind. Die Kanten können einerseits in Richtung Mitte der jeweiligen Schmiermitteltasche gekrümmt sein oder in Umfangsrichtung nach außen gekrümmt sein. Die Krümmung nach innen führt zu einer verstärkten Verjüngung der Vertiefungen und kann den hydrodynamischen Druck, welcher durch das Schmiermittel im Betriebsfall entsteht, weiter erhöhen. Eine Krümmung nach außen kann dazu führen, dass mehr Schmiermittel in den jeweiligen Schmiermitteltaschen angesammelt werden kann, jedoch kann sich dies negativ auf den durch das Schmiermittel erzeugbaren Druck auswirken.

Gemäß einer alternativen Ausgestaltung der Erfindung ist vorgesehen, dass die erste und/oder die zweite Schmiermitteltasche jeweils eine Zwischenfläche und mindestens eine Übergangsfläche aufweisen, wobei die Zwischenfläche sich im Wesentlichen parallel zur jeweiligen Anlauffläche und die Übergangsfläche sich in Umfangsrichtung nach außen hin zur jeweiligen Anlauffläche erstreckt, wobei diese insbesondere in einem Winkel zur Zwischenfläche angeordnet ist. Die Zwischenfläche ist bevorzugt mittig zwischen zwei Übergangsflächen angeordnet. Es ist weiterhin denkbar, dass die erste und die zweite Schmiermitteltasche in radialer Richtung nach außen auch eine Übergangsfläche aufweist, welche in einem Winkel zur Zwischenfläche angeordnet ist und sich zur jeweiligen Anlauffläche erstreckt. Die jeweiligen Übergangsflächen wirken sich insbesondere vorteilhaft auf die Druckerzeugung durch das Schmiermittel aus, wobei die Übergangsflächen eine weitere Querschnittsreduktion darstellen. Ferner ermöglichen die Übergangsflächen einen sanften Übergang des Schmiermittels auf die jeweilige Anlauffläche, wobei sich ein homogenerer Schmiermittelfilm bilden kann. Es ist denkbar, dass lediglich eine Übergangsfläche an der in Umfangsrichtung, bezogen auf die Drehrichtung, hinteren Kante angeordnet ist. Die Drehrichtung in Kombination mit der Übergangsfläche ermöglicht den sanften Schmiermittelübergang.

In einer alternativen Ausgestaltung der Erfindung ist vorgesehen, dass die erste und/oder die zweite und/oder die weitere Schmiermitteltasche zwei Übergangsflächen aufweisen, wobei diese sich ausgehend von der Mitte der Schmiermitteltasche in Umfangsrichtung in entgegengesetzte Richtungen zur jeweiligen Anlauffläche erstrecken. Insbesondere bevorzugt sind die Übergangsflächen in einem Winkel zur jeweiligen Anlauffläche angeordnet.

Gemäß einer alternativen Ausgestaltung der Erfindung ist vorgesehen, dass die Anlaufscheibe gekrümmt oder gewölbt oder sphärisch ausgebildet ist. Im Rahmen dieser Erfindung kann sphärisch als Teil einer Kugeloberfläche verstanden werden, wobei die Anlaufscheibe bevorzugt einen Teilbereich der Kugeloberfläche kleiner als 50%, besonders bevorzugt kleiner als 40%, umfasst. Die Anlaufscheibe kann einen Krümmungsradius aufweisen, welcher insbesondere an den jeweiligen Anwendungsfall angepasst ist. Spezielle Anwendungen wären beispielsweise in der Antriebstechnik, insbesondere in Kugellagern, Achsgetrieben oder Differentialen. Bevorzugt findet eine solche Anlaufscheibe Anwendung als Kugelanlaufscheibe.

In einer weiteren bevorzugten Ausgestaltung der Erfindung sind die erste und die zweite Anlauffläche im Wesentlichen flach ausgebildet. Dies kann insbesondere vorteilhaft sein, sofern die Anlaufscheibe zwischen zwei im Wesentlichen parallelen Bauteilen angeordnet ist, sodass die Anlaufscheibe flach ausgestaltet sein sollte, um möglichst optimal für Schmierung zu sorgen.

Ein weiterer Gegenstand der Erfindung ist ein Planetengetriebe mit mindestens einer Anlaufscheibe nach einem der vorhergehenden Ausführungsformen, wobei die Anlaufscheibe zwischen einem Planetenträger und einem Planetenrad angeordnet ist.

Die oben ausgeführten Ausgestaltungen, Vorteile oder technischen Wirkungen der ersten und zweiten Schmiermitteltaschen können auch auf die weiteren Schmiermitteltaschen Anwendung finden.

Die erfindungsgemäße Anlaufscheibe und die oben ausgeführten Ausgestaltungen werden bevorzugt zur Schmierung von rotierenden Bauteilen in beengten Räumen verwendet. Vorteilhafte Anwendungsgebiete sind dabei insbesondere in der Fahrzeugtechnik, wobei diese auch die Elektromobilität umfasst. Die Anlaufscheibe findet insbesondere bevorzugt Anwendung in den Antriebssträngen.

Weitere Einzelheiten und Vorteile der Erfindung sollen nachfolgend anhand der in den Zeichnungen dargestellten Ausführungsbeispiele erläutert werden. Hierin zeigt:

### Kurze Beschreibung der Figuren

- Fig. 1: ein erstes Ausführungsbeispiel einer ersten Anlauffläche einer erfindungsgemäßen Anlaufscheibe in einer Frontansicht;
- Fig. 2: ein erstes Ausführungsbeispiel einer zweiten Anlauffläche der in Fig. 1 gezeigten erfindungsgemäßen Anlaufscheibe in einer Frontansicht;
- Fig. 3a: eine Schnittansicht durch eine erste und eine zweite Schmiermitteltasche des ersten Ausführungsbeispiels aus Fig. 1 und Fig. 2;
- Fig. 3b: eine Schnittansicht durch eine weitere Schmiermitteltasche einer ersten Anlauffläche und eine weitere Schmiermitteltasche einer zweiten Anlauffläche des ersten Ausführungsbeispiels der in Fig. 1 und Fig. 2 gezeigten Anlaufscheibe;
- Fig. 4: eine Schnittansicht eines Ausführungsbeispiels eines Planetengetriebes mit einer Anlaufscheibe; und
- Fig. 5: eine Schnittansicht eines zweiten Ausführungsbeispiels einer erfindungsgemäßen Anlaufscheibe.

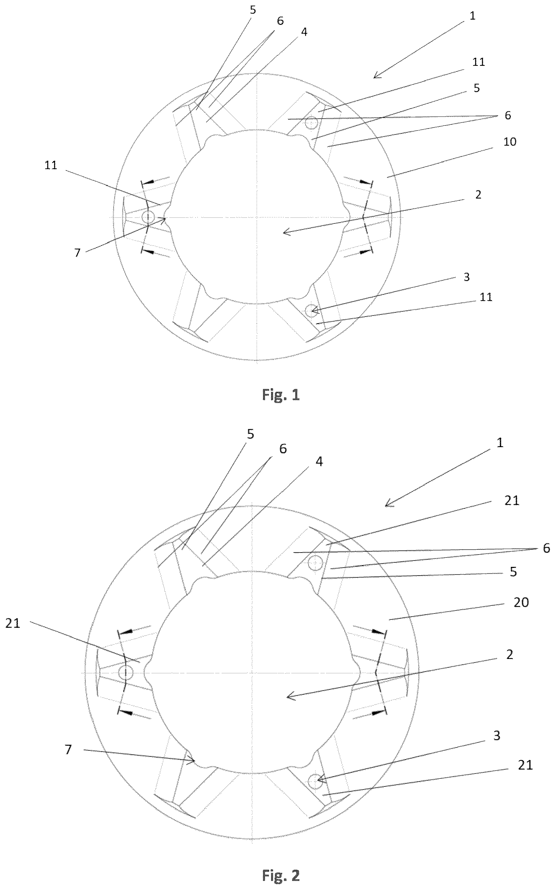

Fig. 1 zeigt ein erstes Ausführungsbeispiel einer ersten Anlauffläche 10 einer erfindungsgemäßen Anlaufscheibe 1. Die Anlaufscheibe 1 dient primär dem Verteilen einer Flüssigkeit, wobei die Flüssigkeit insbesondere ein Schmiermittel sein kann. Die Anlaufscheibe 1 kann neben einem oder zwischen mehreren rotierenden Bauteilen angebracht werden, wobei die Anlaufscheibe 1 in vorteilhafterweise die Bauteile schmiert.

Dafür weist die Anlaufscheibe 1 aus dem ersten Ausführungsbeispiel eine erste im Wesentlichen flache Anlauffläche 10 auf. Ferner weist die Anlaufscheibe 1 aus dem ersten Ausführungsbeispiel eine zweite im Wesentlichen flache Anlauffläche 20 auf, welche im Wesentlichen parallel zu der ersten Anlauffläche 10 angeordnet ist. Die zweite Anlauffläche 20 wird in Fig. 2 dargestellt.

Zur Anwendung der Anlaufscheibe 1 insbesondere im Antriebsstrang eines Fahrzeugs, bevorzugt ein Kraftfahrzeug, weist die Anlaufscheibe 1 eine zentrale Bohrung 2 auf. Die zentrale Bohrung 2 erstreckt sich erfindungsgemäß parallel zu einer Drehachse der Anlaufscheibe 1. Weiterhin ist es denkbar, dass der Mittelpunkt der zentralen Bohrung 2 auf der Drehachse der Anlaufscheibe 1 liegt. Mittels der zentralen Bohrung 2 kann die Anlaufscheibe 1 auf eine Achse, Welle oder einen Bolzen des jeweiligen Anwendungsfalls aufgeschoben werden. Über die Achse, Welle oder den Bolzen kann die Anlaufscheibe 1 mit der Anlauffläche 10 an oder nahe dem zu schmierenden Bauteil angeordnet werden, wobei die erste Anlauffläche 10 eine erste Schmiermitteltasche 11 in Form einer Vertiefung aufweist. Die erste Schmiermitteltasche 11 kann im Anwendungsfall durch eine Rotationsbewegung der Anlaufscheibe 1 mit dem Schmiermittel gefüllt werden. Hierbei wird das Schmiermittel durch die Rotation und die damit vorliegende Zentrifugalkraft nach außen gedrückt. In der ersten Schmiermitteltasche 11 kann sich das Schmiermittel sammeln, wobei durch die anliegende Zentrifugalkraft in Kombination mit dem Schmiermittel ein hydrodynamischer Druck in der ersten Schmiermitteltasche 11 erzeugt werden kann. Dieser fungiert einerseits als Polster zwischen der Anlaufscheibe 1 und dem zu schmierenden Bauteil und andererseits kann die anliegende Kraft das Schmiermittel durch einen in der ersten Schmiermitteltasche 11 angeordneten Kanal 3 pressen. Weiterhin wird durch die erste Schmiermitteltasche 11 das Schmiermittel auf die erste Anlauffläche 10 transportiert und dient somit der Schmiermittelfilmbildung. Der Kanal 3 ist im Wesentlichen parallel zur Drehachse der Anlaufscheibe 1 angeordnet und erstreckt sich axial durch die Anlaufscheibe 1. Weiterhin stellt der Kanal 3 eine Fluidverbindung zwischen der ersten Anlauffläche 10 und der zweiten Anlauffläche 20 dar. Alternativ kann der Kanal 3 sich in einem Winkel zu der Drehachse durch die Anlaufscheibe 1 erstrecken. Weiter alternativ ist eine Anlauffläche 10, 20 ohne einen Kanal 3 denkbar, so dass zwischen den jeweiligen Anlaufflächen 10, 20 keine Fluidverbindung durch die Anlaufscheibe 1 besteht. Dies ermöglicht das Erzeugen von unterschiedlichen Reibmomenten an den jeweiligen Anlaufflächen 10, 20, wobei dazu die Anzahl der Schmiermitteltaschen 11, 21 auf einer Anlauffläche 10, 20 sich von der Anzahl an Schmiermitteltaschen 11, 21 auf der jeweiligen anderen Anlauffläche 10, 20 unterscheidet. Es ist dabei denkbar, dass eine Anlauffläche 10, 20 keine Schmiermitteltasche 11, 21 aufweist, so dass die Anlauffläche 10, 20 sich im Wesentlichen durch den erhöhten Reibwiederstand an benachbarten Objekt festsetzt.

Die durch die Rotationsbewegung der Anlaufscheibe 1 anliegende Zentrifugalkraft kann das Schmiermittel aus dem Bereich der zentralen Bohrung 2 verdrängen und in die erste Schmiermitteltasche 11 zwingen. Hierbei entsteht insbesondere ein durch das verdrängte Schmiermittel erzeugter Unterdruck. Dieser Unterdruck zieht die Anlaufscheibe 1 an das naheliegende zu schmierende Bauteil, bzw. an eines der beiden naheliegenden zu schmierenden Bauteile. Dieser Effekt kann insbesondere weiteren Verschleiß verursachen, sofern diesem nicht durch den Druck, welcher durch das in den Schmiermitteltaschen 11, 21 vorliegende Schmiermittel entsteht, entgegengewirkt wird. Erfindungsgemäß verjüngt sich die erste und/oder die zweite Schmiermitteltasche 11, 21 in radialer Richtung bezogen auf die Drehachse nach außen. Im ersten Ausführungsbeispiel verjüngen sich die erste und die zweite Schmiermitteltasche 11, 21 nach außen. Vorteilhafterweise wird das nach außen verdrängte Schmiermittel, durch die Querschnittsänderung, stärker komprimiert und erzeugt einen dem Unterdruck entgegenwirkenden hydrodynamischen Druck. Dafür weist die erste Schmiermitteltasche 11 bzw. eine weitere Schmiermitteltasche 4 bevorzugt einen dreiecksförmigen - oder trapezförmigen Querschnitt auf.

Die erste Schmiermitteltasche 11 weist im vorliegenden ersten Ausführungsbeispiel eine Zwischenfläche 5 und zwei Übergangsflächen 6 auf. Die Zwischenfläche ist im Wesentlichen parallel zu der jeweiligen Anlauffläche, hier die erste Anlauffläche 10, angeordnet. Alternativ ist es denkbar, dass die Zwischenfläche 5 radial nach außen hin ansteigt, wobei dies insbesondere für einen weiteren Druckanstieg durch das Schmiermittel sorgen kann. Die Schmiermitteltaschen 11, 4 können eine Zwischenfläche 4, wobei die Tiefe der Zwischenfläche 4 in radialer Richtung nach außen abnimmt. Die Tiefe kann dabei der Abstand zwischen der Zwischenfläche 4 und dem Niveau der ersten Anlauffläche 10 sein. Weiterhin erstrecken sich die Übergangsflächen 6 bevorzugt in Umfangsrichtung nach außen hin zur jeweiligen Anlauffläche, hier die erste Anlauffläche 10. Somit kann ein insbesondere sanfter Übergang des Schmiermittels auf die erste Anlauffläche 10 ermöglicht werden. Die Anordnung zweier Übergangsflächen 6 ermöglicht diesen sanften Übergang unabhängig von der Drehrichtung der Anlaufscheibe 1. Sofern die Anlaufscheibe 1 lediglich in eine Richtung rotiert, ist es denkbar, dass die in Umfangsrichtung nach außen hin und in Drehrichtung hintere angeordnete Kante nur eine Übergangsfläche 6 aufweist.

Aus Fig. 1 geht hervor, dass die erste Anlauffläche 10 mehrere erste Schmiermitteltaschen 11 aufweist. Es ist denkbar, dass eine erste Anlauffläche 10 zwei bis acht erste Schmiermitteltaschen 11. Im vorliegenden Ausführungsbeispiel weist die erste Anlauffläche 10 drei erste Schmiermitteltaschen 11 auf, wobei diese in einer Umfangsrichtung zueinander beabstandet sind. Bevorzugt sind die ersten Schmiermitteltaschen 11 maximal zueinander beabstandet. In Fig. 1 sind die ersten Schmiermitteltaschen 11 in einem Winkel von 120 ° zueinander beabstandet. Zwischen den ersten Schmiermitteltaschen 11 sind in Umfangsrichtung mittig weitere Schmiermitteltaschen 4 angeordnet. Die weiteren Schmiermitteltaschen 4 weisen auch eine Zwischenfläche 5 und zwei Übergangsflächen 6 auf. Sofern eine erste Anlauffläche 10 erste Schmiermitteltaschen 11 und weitere Schmiermitteltaschen 4 aufweist, wird bevorzugt der Gesamtwinkel durch die Gesamtanzahl von Schmiermitteltaschen geteilt, um die jeweiligen Winkelabstände zueinander zu bestimmen. Es ist insbesondere bevorzugt, dass die ersten Schmiermitteltaschen 11 alternierend mit den weiteren Schmiermitteltaschen 4 angeordnet sind. So ist neben einer ersten Schmiermitteltasche 11 eine weitere Schmiermitteltasche 4 anzuordnen, wobei auf diese wiederrum eine erste Schmiermitteltasche 11 folgt.

Die Schmiermitteltaschen 11, 4 auf der ersten Anlauffläche 10 sind in vorteilhafterweise gleichmäßig angeordnet, um einen möglichst gleichmäßigen Schmiermittelfilm auf der ersten Anlauffläche 10 bereitzustellen.

Fig. 1 zeigt weiterhin, dass die ersten und die weiteren Schmiermitteltaschen 11, 4 sich bis zur einer durch die zentrale Bohrung 2 gebildeten Innenwandung erstrecken. Zusätzlich weisen die Schmiermitteltaschen 11, 4 jeweils einen Rücksprungbereich 7 an der Innenwandung der zentralen Bohrung 2 auf. Dieser ist im vorliegenden Beispiel mittig, bezogen auf die jeweilige Schmiermitteltasche 11, 4, angeordnet. Der Rücksprungbereich 7 kann eine Aussparung sein, welche Schmiermittel in einem Eingangsbereich der Schmiermitteltaschen 11, 4 ansammeln kann. Die Anlaufscheibe 1 kann auf eine Achse, Welle oder einen Bolzen aufgeschoben werden, wobei diese anteilig an der Innenwandung der Anlaufscheibe 1 anliegen. Der Rücksprungbereich 7 liegt bevorzugt nicht direkt an der Achse, Welle oder dem Bolzen an, wobei somit vorteilhafterweise hier Schmiermittel angesammelt wird.

Die erste und die weitere Schmiermitteltasche 11, 4 erstreckt sich in Fig. 1 nicht bis zu der in radialer Richtung außenliegenden Stirnseite der Anlaufscheibe 1. Sofern die Vertiefung der jeweiligen Schmiermitteltasche sich bis zu der außenliegenden Stirnseite der Anlaufscheibe 1 erstrecken würde, könnte kein hydrodynamischer Druck erzeugt werden. Es wäre jedoch denkbar, dass eine oder mehrere erste und/oder weitere Schmiermitteltaschen 11, 4 einen Abführkanal in Form einer Vertiefung aufweisen, wobei ein erster Abführkanal sich ausgehend von einer der ersten Schmiermitteltaschen 11 in radialer Richtung nach außen bis zu einer radialen Stirnseite der Anlaufscheibe 1 erstreckt. Ein weiterer Abführkanal kann sich ausgehend von einer der weiteren Schmiermitteltaschen 4 in radialer Richtung nach außen bis zu einer radialen Stirnseite der Anlaufscheibe 1 erstrecken. Dies würde einen Schmiermittelaustausch ermöglichen und insbesondere die Kühlung der anliegenden Bauteile und der Anlaufscheibe 1 ermöglichen.

Fig. 2 zeigt die Rückseite des ersten Ausführungsbeispiels der Anlaufscheibe 1 aus Fig. 1. Hier wird eine zweite Anlauffläche 20 mit drei zweiten Schmiermitteltaschen 21 und drei weiteren Schmiermitteltaschen 4 gezeigt. Die zweiten Schmiermitteltaschen 21 sind insbesondere korrespondierend zu den ersten Schmiermitteltaschen 11, wobei diese über den Kanal 3 Fluidverbunden sind. Alternativ muss keine Fluidverbindung zwischen der ersten Anlauffläche 10 und der zweiten Anlauffläche 20 bestehen. Das Schmiermittel kann durch den Kanal 3 beispielsweise von einer ersten Schmiermitteltasche 11 zu der korrespondierenden zweiten Schmiermitteltasche 21 transportiert werden. Im vorliegenden Ausführungsbeispiel sind die weiteren Schmiermitteltaschen 4 auf der zweiten Anlauffläche 20 korrespondierend zu den weiteren Schmiermitteltaschen 4 der ersten Anlauffläche 10 angeordnet. Dies ist jedoch nicht zwangsläufig notwendig. Somit ist es denkbar, dass die Gesamtanzahl der Schmiermitteltaschen 11, 21, 4 auf der jeweiligen Anlauffläche 10, 20 variieren. Es ist auch denkbar, dass die erste Anlauffläche 10 mehrere weitere Schmiermitteltaschen 4 aufweist und die zweite Anlauffläche 20 keine oder weniger weitere Schmiermitteltaschen 4 aufweist.

Alternativ sei darauf hingewiesen, dass entweder die erste oder die zweite Anlauffläche 10, 20 nicht zwangsläufig Schmiermitteltaschen 11, 21, 4 aufweisen muss. So wäre es im ersten Ausführungsbeispiel denkbar, dass die erste Anlauffläche 10 so aussieht wie in Fig. 1 gezeigt, aber die zweite Anlauffläche 20 keine zweiten Schmiermitteltaschen 21 aufweist. Eine Fluidverbindung kann jedoch weiter über den Kanal 3 zwischen der ersten Schmiermitteltasche 11 und der zweiten Anlauffläche 20 hergestellt werden oder alternativ besteht keine Fluidverbindung zwischen den jeweiligen Anlaufflächen 10, 20. Dies gilt analog, wenn die zweite Anlauffläche 20 so aussieht wie in Fig. 2 gezeigt für die erste Anlauffläche 10. Dies ermöglicht eine einseitige Schmiermitteltaschenanordnung, wodurch beispielsweise Produktionskosten gesenkt werden können. Je nach Anwendungsfall kann eine einseitige Schmiermitteltaschenanordnung ausreichend sein. Die Anlaufscheibe 1 kann vorteilhaft aus vergütetem Stahl, nitrocarburiertem Stahl oder Bronze gefertigt sein. Selbstverständlich sind andere Materialien ebenso möglich.

Bei der zweiten Anlauffläche 20 aus Fig. 2 können dieselben Vorteile, technischen Wirkungen und Ausführungsbeispiele, die bereits im Zusammenhang mit der ersten Anlauffläche 10 aus Fig. 1 erläutert worden sind, erreicht werden.

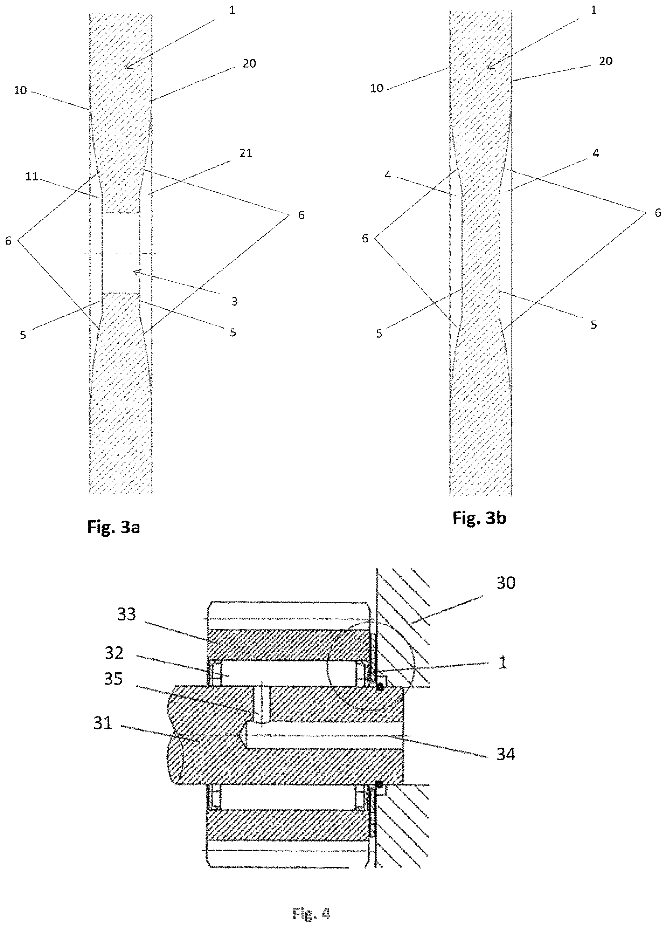

Figuren 3a und 3b zeigen jeweils eine Schnittansicht durch das in Fig. 1 und Fig. 2 gezeigten ersten Ausführungsbeispiels der Anlaufscheibe 1. In Fig. 3a wird ersichtlich, dass die erste Schmiermitteltasche 11 mit der zweiten Schmiermitteltasche 21 über einen Kanal 3 verbunden ist. Aus Fig. 3b geht eindeutig hervor, dass die weiteren Schmiermitteltaschen 4 der jeweiligen ersten Anlauffläche 10 und der zweiten Anlauffläche 20 nicht mittels eines Kanals fluidverbunden sind.

In Fig. 4 wird eine Schnittdarstellung eines Planetengetriebes mit einer Anlaufscheibe 1 abgebildet. Das Planetengetriebe weist einen Planetenträger 30, einen Planetenbolzen 31, eine Nadelreihe 32 und Planetenräder 33 auf. Auf dem Planetenbolzen 31 ist die Anlaufscheibe 1 zwischen den Stirnseiten der Nadelreihe 32 und einem Planetenrad 33 einerseits und dem Planetenträger 30 andererseits angeordnet. Im Planetenbolzen sind ein Schmiermittelkanal 34 und ein weiterer Schmiermittelkanal 35 angeordnet, über welche die Schmiermittelversorgung für die Nadelreihe 32 ermöglicht wird. Von dort gelangt das Schmiermittel in die Rücksprungbereiche 7 der Anlaufscheibe 1 und ferner in die Schmiermitteltaschen 11, 21, 4 der Anlaufscheibe 1.

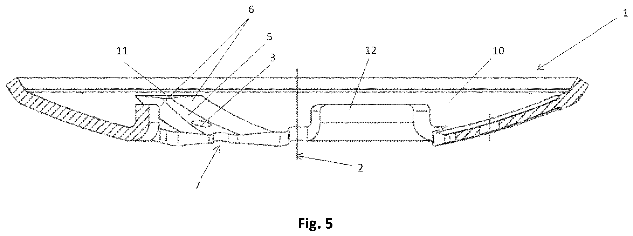

Fig. 5 zeigt ein zweites Ausführungsbeispiel einer erfindungsgemäßen Anlaufscheibe 1. Das zweite Ausführungsbeispiel zeigt eine gekrümmte oder gewölbte oder sphärische Anlaufscheibe 1. Dazu weist die Anlaufscheibe 1 einen Krümmungsradius auf, welcher bevorzugt durch den jeweiligen Anwendungsfall bestimmt wird. Die zweite Anlauffläche 20 ist nach außen hin gekrümmt, wobei die erste Anlauffläche 10 innenliegend angeordnet ist. Weiterhin zeigt das zweite Ausführungsbeispiel ein Positionierelement 12 in Form eines Steges, welcher eine genaue Positionierung ermöglicht.

Auch hier ist es denkbar, dass lediglich eine oder beide Anlaufflächen 10, 20 eine Schmiermitteltaschenanordnung 11, 21 aufweisen. Das zweite Ausführungsbeispiel zeigt lediglich erste Schmiermitteltaschen 11 auf der ersten Anlauffläche 10. Die zweite Anlauffläche 20 weist keine Schmiermitteltaschen 21 im vorliegenden Ausführungsbeispiel auf.

Alternativ kann die zweite Anlauffläche 20 eine oder mehrere Schmiermitteltaschen 21 aufweisen und die erste Anlauffläche 10 weist keine Schmiermitteltaschen 11 auf.

Das zweite Ausführungsbeispiel der Anlaufscheibe 1 wird bevorzugt als Kugelanlaufscheibe verwendet.

Bei dem zweiten Ausführungsbeispiel aus Fig. 5 können dieselben Vorteile, technischen Wirkungen und Ausführungsbeispiele, die bereits im Zusammenhang mit dem ersten Ausführungsbeispiel erläutert worden sind, erreicht werden, sofern nicht durch die gekrümmte oder gewölbte oder sphärische Form ausgeschlossen.

Nachfolgend werden mögliche Ausführungsformen der erfindungsgemäßen Anlaufscheibe 1 und des erfindungsgemäßen Planetengetriebes beschrieben.

Ausführungsform 1 betrifft eine Anlaufscheibe 1 zum Verteilen einer Flüssigkeit, wobei die Anlaufscheibe 1 eine sich parallel zu einer Drehachse der Anlaufscheibe 1 erstreckende zentrale Bohrung 2 zum Aufschieben der Anlaufscheibe 1 auf einen Bolzen oder eine Welle aufweist, wobei die Anlaufscheibe 1 eine erste im Wesentlichen flache Anlauffläche 10 und eine zweite im Wesentlichen flache Anlauffläche 20 aufweist, wobei die erste Anlauffläche 10 und die zweite Anlauffläche 20 im Wesentlichen parallel zueinander angeordnet sind, wobei die erste Anlauffläche 10 eine erste Schmiermitteltasche 11 in Form einer Vertiefung in der ersten Anlauffläche 10 aufweist, wobei die zweite Anlauffläche 20 eine zweite Schmiermitteltasche 21 in Form einer Vertiefung in der zweiten Anlauffläche 20 aufweist, wobei die erste und die zweite Schmiermitteltasche 10, 20 mittels eines im Wesentlichen parallel zur Drehachse axial durch die Anlaufscheibe 1 verlaufenden Kanals 3 miteinander fluidverbunden sind, wobei die erste und/oder die zweite Schmiermitteltasche 10, 20 sich jeweils in radialer Richtung bezogen auf die Drehachse nach außen verjüngen.

Ausführungsform 2 betrifft eine Anlaufscheibe 1 nach Ausführungsform 1, wobei die erste Anlauffläche 10 mehrere erste Schmiermitteltaschen 11 und die zweite Anlauffläche 20 mehrere zu den ersten Schmiermitteltaschen 11 korrespondierend zweite Schmiermitteltaschen 21 aufweist, wobei die ersten und die zweiten Schmiermitteltaschen 11, 21 der jeweiligen ersten oder zweiten Anlauffläche 10, 20 in einer Umfangsrichtung zueinander beabstandet sind.

Ausführungsform 3 betrifft eine Anlaufscheibe 1 nach den Ausführungsformen 1 oder 2, wobei die erste und/oder die zweite Anlauffläche 10, 20 zusätzlich zu der ersten und der zweiten Schmiermitteltasche 11, 21 mindestens eine weitere Schmiermitteltasche 4 aufweisen.

Ausführungsform 4 betrifft eine Anlaufscheibe 1 nach einer der Ausführungsformen 1 bis 3, wobei die erste und die zweite Schmiermitteltasche 11, 21 sich bis zur einer durch die zentrale Bohrung 2 gebildeten Innenwandung erstreckt.

Ausführungsform 5 betrifft eine Anlaufscheibe 1 nach Ausführungsform 3, wobei die erste und/oder die zweite und/oder die weitere Schmiermitteltasche 11, 21, 4 einen Rücksprungbereich 7 aufweisen, wobei der Rücksprungbereich 7 der jeweiligen Schmiermitteltaschen 11, 21, 4 an der Innenwandung angeordnet ist, wobei der Rücksprungbereich 7 bevorzugt mittig an der jeweiligen Schmiermitteltasche 11, 21, 4 angeordnet ist.

Ausführungsform 6 betrifft eine Anlaufscheibe 1 nach einer der Ausführungsformen 1 bis 5, wobei die erste und/oder die zweite Anlauffläche 10, 20 mindestens einen Abführkanal aufweisen, wobei ein erster und ein zweiter Abführkanal in Form einer Vertiefung auf der jeweiligen ersten oder der zweiten Anlauffläche 10, 20 angeordnet ist, wobei ein erster Abführkanal sich ausgehend von einer der ersten Schmiermitteltaschen 11 in radialer Richtung nach außen bis zu einer radialen Stirnseite der Anlaufscheibe 1 erstreckt und ein zweiter Abführkanal sich ausgehend von einer der zweiten Schmiermitteltaschen 11 in radialer Richtung nach außen bis zu der radialen Stirnseite der Anlaufscheibe 1 erstreckt.

Ausführungsform 7 betrifft eine Anlaufscheibe 1 nach einer der Ausführungsformen 1 bis 6, wobei die Vertiefungen der ersten und/oder der zweiten und/oder der weiteren Schmiermitteltaschen 11, 21, 4 dreiecksförmig oder trapezförmig sind.

Ausführungsform 8 betrifft eine Anlaufscheibe 1 nach einer der Ausführungsformen 1 bis 7, wobei die erste und die zweite Schmiermitteltasche 11, 21 jeweils eine Zwischenfläche 5 und mindestens eine Übergangsfläche 6 aufweisen, wobei die Zwischenfläche 5 sich im Wesentlichen parallel zur jeweiligen Anlauffläche 10, 20 und die Übergangsfläche 6 sich in Umfangsrichtung nach außen hin zur jeweiligen Anlauffläche 10, 20 erstreckt, wobei diese insbesondere in einem Winkel zur Zwischenfläche 5 angeordnet ist.

Ausführungsform 9 betrifft ein Planetengetriebe mit mindestens einer Anlaufscheibe 1 nach Anspruch 1, wobei die Anlaufscheibe 1 zwischen einem Planetenträger 30 und einem Planetenrad 33 angeordnet ist.

### Bezugszeichenliste

1-Anlaufscheibe
2 - zentrale Bohrung
3 - Kanal
4-weitere Schmiermitteltasche
5 - Zwischenfläche
6 - Übergangsfläche
7 - Rücksprungbereich
10 - erste Anlauffläche
11 - erste Schmiermitteltasche
12 - Positionierelement
20 - zweite Anlauffläche
21 - zweite Schmiermitteltasche
30 - Planetenträger
31 - Planetenbolzen
32 - Nadelreihe
33 - Planetenrad
34 - Schmiermittelkanal
35 - weiterer Schmiermittelkanal

## Patentansprüche

1. Anlaufscheibe (1) zum Verteilen einer Flüssigkeit, wobei die Anlaufscheibe (1) eine sich parallel zu einer Drehachse der Anlaufscheibe (1) erstreckende zentrale Bohrung (2) zum Aufschieben der Anlaufscheibe (1) auf einen Bolzen oder eine Welle aufweist, wobei die Anlaufscheibe (1) eine erste Anlauffläche (10) und eine zweite Anlauffläche (20) aufweist, wobei die erste Anlauffläche (10) und die zweite Anlauffläche (20) insbesondere im Wesentlichen parallel zueinander angeordnet sind, wobei die erste Anlauffläche (10) eine erste Schmiermitteltasche (11) in Form einer Vertiefung in der ersten Anlauffläche (10) aufweist und/oder die zweite Anlauffläche (20) eine zweite Schmiermitteltasche (21) in Form einer Vertiefung in der zweiten Anlauffläche (20) aufweist, wobei optional die erste Schmiermitteltasche (11) oder die zweite Schmiermitteltasche (21) mit der jeweiligen anderen Anlauffläche (10, 20) oder mit einer jeweiligen korrespondierenden ersten oder zweiten Schmiermitteltasche (11, 21) mittels eines insbesondere im Wesentlichen parallel zur Drehachse axial durch die Anlaufscheibe verlaufenden Kanals (3) fluidverbunden sind, **dadurch gekennzeichnet, dass** die erste und/oder die zweite Schmiermitteltasche (11, 21) sich jeweils in radialer Richtung bezogen auf die Drehachse nach außen verjüngen.

2. Anlaufscheibe (1) nach Anspruch 1, **dadurch gekennzeichnet, dass** die erste Anlauffläche (10) mehrere erste Schmiermitteltaschen (11) und/oder die zweite Anlauffläche (20) mehrere zweite Schmiermitteltaschen (21) aufweist, wobei die ersten Schmiermitteltaschen (11) und die zweiten Schmiermitteltaschen (21) insbesondere korrespondierend zueinander angeordnet sind, wobei die ersten und/oder die zweiten Schmiermitteltaschen (11, 21) der jeweiligen ersten oder zweiten Anlauffläche (10, 20) in einer Umfangsrichtung zueinander beabstandet sind.

3. Anlaufscheibe (1) nach einem der vorhergehenden Ansprüche, **dadurch gekennzeichnet, dass** die erste und/oder die zweite Anlauffläche (10, 20) zusätzlich zu der ersten und/oder der zweiten Schmiermitteltasche (11, 21) mindestens eine weitere Schmiermitteltasche (4) aufweist.

4. Anlaufscheibe (1) nach einem der vorhergehenden Ansprüche, **dadurch gekennzeichnet, dass** die erste und/oder die zweite Schmiermitteltasche (11, 21) sich bis zur einer durch die zentrale Bohrung (2) gebildeten Innenwandung erstreckt.

5. Anlaufscheibe (1) nach Anspruch 3, **dadurch gekennzeichnet, dass** die erste und/oder die zweite und/oder die weitere Schmiermitteltasche (11, 21, 4) einen Rücksprungbereich (7) aufweisen, wobei der Rücksprungbereich (7) der jeweiligen Schmiermitteltaschen (11, 21, 4) an der Innenwandung angeordnet ist, wobei der Rücksprungbereich (7) bevorzugt mittig an der jeweiligen Schmiermitteltasche (11, 21, 4) angeordnet ist.

6. Anlaufscheibe (1) nach einem der vorhergehenden Ansprüche, **dadurch gekennzeichnet, dass** die erste und/oder die zweite Anlauffläche (10, 20) mindestens einen Abführkanal aufweisen, wobei ein erster und ein zweiter Abführkanal in Form einer Vertiefung auf der jeweiligen ersten oder der zweiten Anlauffläche (10, 20) angeordnet ist, wobei ein erster Abführkanal sich ausgehend von einer der ersten Schmiermitteltaschen (11) in radialer Richtung nach außen bis zu einer radialen Stirnseite der Anlaufscheibe (1) erstreckt und ein zweiter Abführkanal sich ausgehend von einer der zweiten Schmiermitteltaschen (11) in radialer Richtung nach außen bis zu der radialen Stirnseite der Anlaufscheibe (1) erstreckt.

7. Anlaufscheibe (1) nach einem der vorhergehenden Ansprüche, **dadurch gekennzeichnet, dass** die Vertiefungen der ersten und/oder der zweiten und/oder der weiteren Schmiermitteltaschen (11, 21, 4) dreiecksförmig oder trapezförmig sind.

8. Anlaufscheibe (1) nach einem der vorhergehenden Ansprüche, **dadurch gekennzeichnet, dass** die erste und/oder die zweite Schmiermitteltasche (11, 21) jeweils eine Zwischenfläche (5) und mindestens eine Übergangsfläche (6) aufweisen, wobei die Zwischenfläche (5) sich im Wesentlichen parallel zur jeweiligen Anlauffläche (10, 20) und die Übergangsfläche (6) sich in Umfangsrichtung nach außen hin zur jeweiligen Anlauffläche (10, 20) erstreckt, wobei diese insbesondere in einem Winkel zur Zwischenfläche (5) angeordnet ist.

9. Anlaufscheibe (1) nach einem der vorhergehenden Ansprüche, **dadurch gekennzeichnet, dass** die Anlaufscheibe (1) gekrümmt oder gewölbt oder sphärisch ausgebildet ist.

10. Planetengetriebe mit mindestens einer Anlaufscheibe (1) nach Anspruch 1, wobei die Anlaufscheibe (1) zwischen einem Planetenträger (30) und einem Planetenrad (33) angeordnet ist.
